# EUROPEAN PATENT APPLICATION

(11) **EP 2 886 403 A2**
(43) Date of publication of application: **24.06.2015**
(21) Application number: 14198030.0
(22) Date of filing: 15.12.2014
(51) Int. Cl.: B60S 1/04

(54) **Carrier element for a wiper linkage and wiper linkage for a wiper system**

(30) Priority: 19.12.2013 DE 102013114482
(71) Applicant: Valeo Wischersysteme GmbH, 74321 Bietigheim-Bissingen (DE)
(72) Inventor: Waible, Siegfried, 74223 Flein (DE); Noack, Tobias, 74226 Nordheim (DE)
(74) Representative: Callu Danseux, Violaine

(57) **Abstract**

The invention relates to a carrier element (20) for a wiper linkage (100) of a wiper system for cleaning a vehicle windscreen, comprising a pin-shaped fastening section (25) on the outer circumference whereof a tubular section (26) of a transmission element (28) can be slid and can be fixed on the fastening section (25) by means of a press connection, wherein the tubular section (26) can be pressed into at least one recess (30) of the fastening section (25). According to the invention, it is provided that the carrier element (20) has at least one additional retaining region (41) which is configured to receive bending forces acting on the transmission element (28) and introduce them into the carrier element (20).

## Description

### Prior art

The invention relates to a carrier element for a wiper linkage of a wiper system for cleaning a vehicle windscreen according to the precharacterizing clause of Claim 1. The invention furthermore relates to a wiper linkage for a wiper system comprising a carrier element according to the invention.

A carrier element according to the precharacterizing clause of Claim 1 is already known in practise and serves for transmitting force and torque between elements of the wiper linkage. In this connection, the carrier element, which is composed in particular of plastic and is designed as an injection moulded part, has a pin-shaped fastening section, on which a tubular section of a transmission element in the form of a transmission rod can be slid. In order to ensure the connection between the fastening section and the transmission element, it is provided that a plurality of elongate recesses are in practise formed on the circumferential surface of the fastening section, said recesses serving to connect the transmission element in the region of the part overlapped by the fastening section to the carrier element. For this purpose, partial regions of the transmission element are moulded or pressed in in the region of the recesses by being pressed into the recess. A disadvantage of the known prior art is that, in particular when bending stresses occur in the transition region of the fastening section to the tubular section of the transmission element, the pin-shaped fastening section may break because of stress concentrations.

### Disclosure of the invention

Starting from the prior art presented, the invention is based on the object of developing a carrier element for a wiper linkage of a wiper system for cleaning a vehicle windscreen according to the precharacterizing clause of Claim 1 in such a manner that the pin-shaped fastening section and/or the carrier element is of increased strength in comparison to the prior art.

This object is achieved according to the invention in the case of a carrier element for a wiper linkage of a wiper system for cleaning a vehicle windscreen with the features of Claim 1 in that the carrier element has an additional retaining region which is configured to receive bending forces acting on the transmission element and introduce them into the carrier element. In other words, this means that bending forces, in addition to being transmitted by the pin-shaped fastening section, are transmitted via an additional retaining region, and therefore the bending stress on the pin-shaped fastening section is reduced. The pin-shaped fastening section can therefore serve primarily for transmitting tensile and compressive forces to the transmission element, which forces are introduced in the direction of the longitudinal axis of the fastening section or of the transmission element while at least substantially no bending forces or bending torques are transmitted to the fastening section of the carrier element.

Advantageous developments of the carrier element according to the invention for a wiper linkage of a wiper system for cleaning a vehicle windscreen are cited in the dependent claims. All combinations of at least two of the features disclosed in the claims, the description and/or the figures fall within the scope of the invention.

In a structurally preferred refinement of the additional retaining region, it is provided that the additional retaining region is disposed at a distance from the fastening section. By means of the distance between the additional retaining region and the fastening section, in particular the introduction of force is shifted and the transition from the transmission element to the carrier element is relieved of load.

Furthermore, it is provided that the additional retaining region surrounds the transmission element on its outer circumference at least in sections. As a result, a connection between the additional retaining region and the transmission element is created without an additional fastening element or an additional connection, such as, for example, a weld.

The additional retaining region is coupled to the carrier element by means of at least one, preferably by means of a plurality of reinforcing or connecting elements, which are connected to the carrier element. The use of a plurality of connecting elements has the advantage in particular that the force or bending stress on the respective connecting element is reduced in comparison to the use of a single connecting element.

In a preferred refinement in terms of production, it is provided that a plurality of connecting elements are provided which together with the retaining region are formed in one piece on the carrier element.

In a structural advantageous refinement of the connecting elements, it is provided that the connecting element is configured to be rib- or web-shaped and extends over the entire length of the fastening section, that on the side facing away from the transmission element the connecting element is connected to the carrier element and that the connecting element preferably extends parallel to the longitudinal axis of the fastening section.

In a structural development of the proposal last made, a gap is formed between the fastening section in the region of the tubular section of the transmission element and the connecting element. Such a design has the advantage that, when the tubular section is pressed into the recess of the fastening section, the connecting element can be decoupled from the transmission element in the intermediate region between the additional retaining region and the connection of the connecting element to the carrier element. If, however, the gap is selected to be of precisely such a large size that the connecting or reinforcing element bears against the outer circumference of the transmission element, the advantage ensues therefrom that the connecting or reinforcing element reinforces the transmission element.

Furthermore, in a further structurally advantageous refinement of the invention, two connecting elements and two recesses are provided, wherein the two recesses and the two connecting elements are each arranged offset with respect to one another by respectively 180° in relation to the longitudinal axis of the fastening section and a recess and a connecting element are each arranged offset with respect to one another by respectively 90° in relation to the longitudinal axis. Such a design permits optimum separation of the individual functions of the connecting elements and the recesses.

Furthermore, it is preferably provided, in the variant last mentioned, that the fastening section has a cross section in the region of the gap which is adapted to the inner cross section of the tubular section of the transmission element, and that the recess is arranged offset with respect to the gap in relation to the longitudinal axis of the fastening section. Such a design permits an extensive bearing of the inner diameter or of the inner wall of the transmission element against the fastening section and therefore a uniform transmission of torques and forces between the fastening section and the transmission element.

In a particularly preferred refinement in terms of production of the carrier element, it is provided that the latter is designed as a plastic injection moulded part. As a result, in particular, the additional retaining region and the connecting elements can be produced in a particularly simple manner without these requiring an additional outlay on installation or the like.

The invention also comprises a wiper linkage for a wiper system for cleaning a vehicle windscreen, wherein the wiper linkage has a carrier element according to the invention. Such a wiper linkage has the advantage of the possibility of transmitting particularly high torques or forces between the fastening section of the carrier element and the transmission element without there being the risk of the fastening section on the carrier element breaking.

Further advantages, features and details of the invention emerge from the description below of preferred exemplary embodiments and with reference to the drawing, in which:
- Fig. 1: shows a top view of a wiper linkage of a wiper system for cleaning a vehicle windscreen,
- Fig. 2: shows a carrier element according to the invention in a perspective individual illustration,
- Fig. 3: shows the carrier element according to Fig. 2 in a top view, and
- Fig. 4: shows the carrier element according to Fig. 2 with a transmission element connected to the carrier element.

Identical elements and elements having the same function are provided with the same reference numbers in the figures.

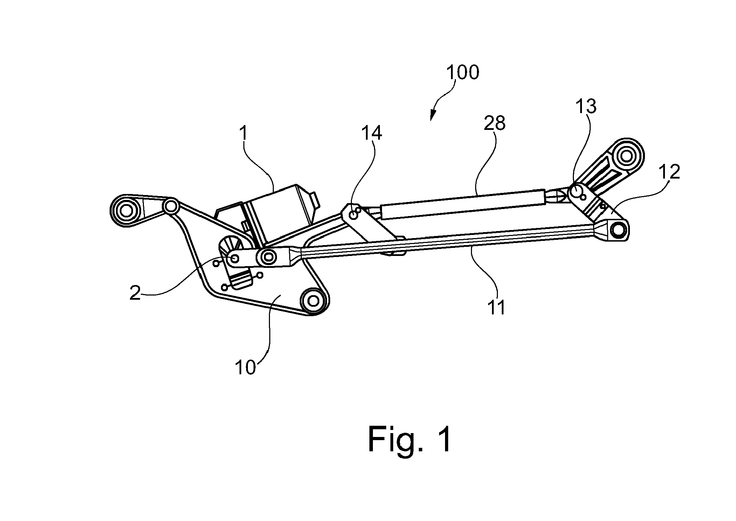

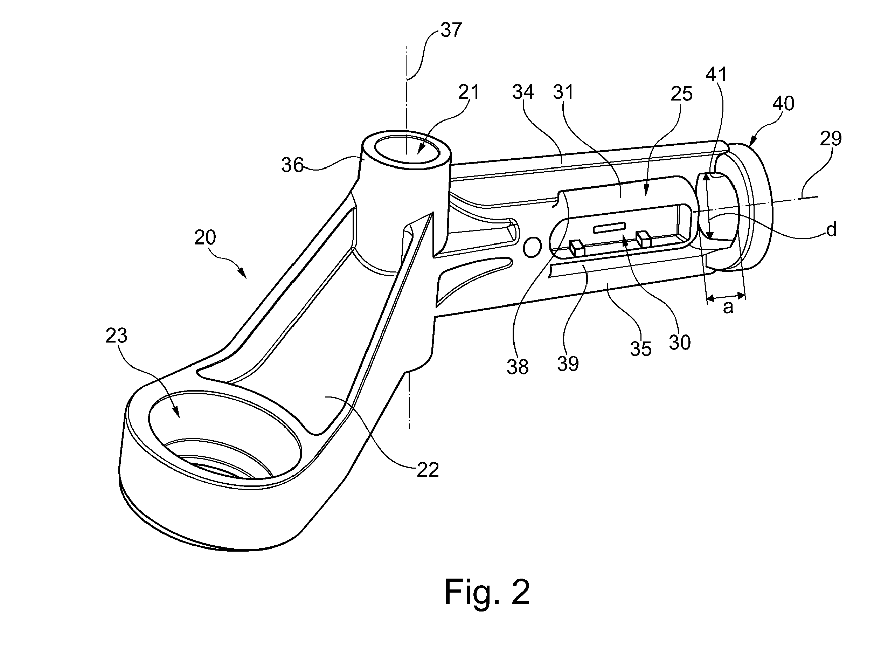

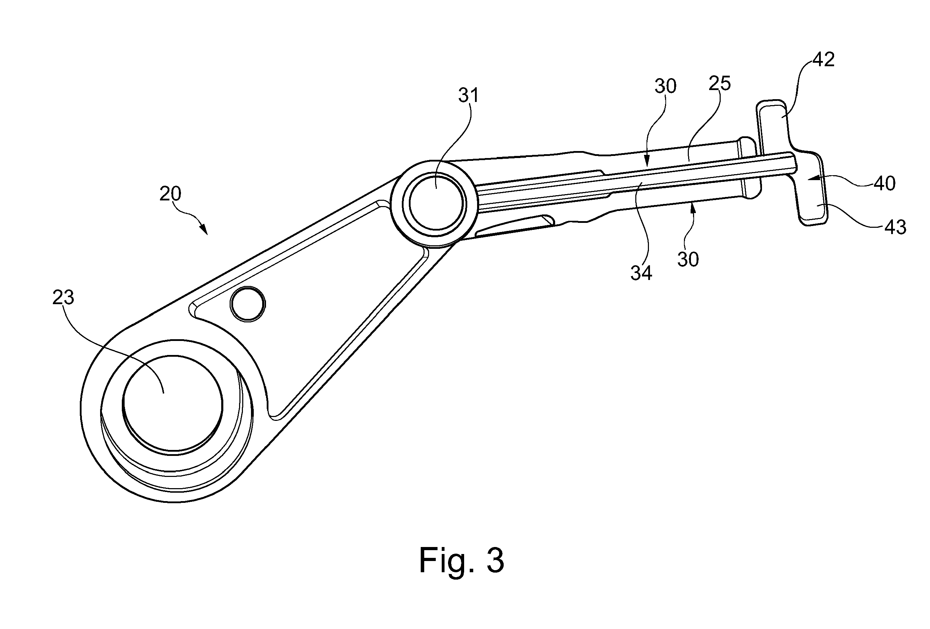

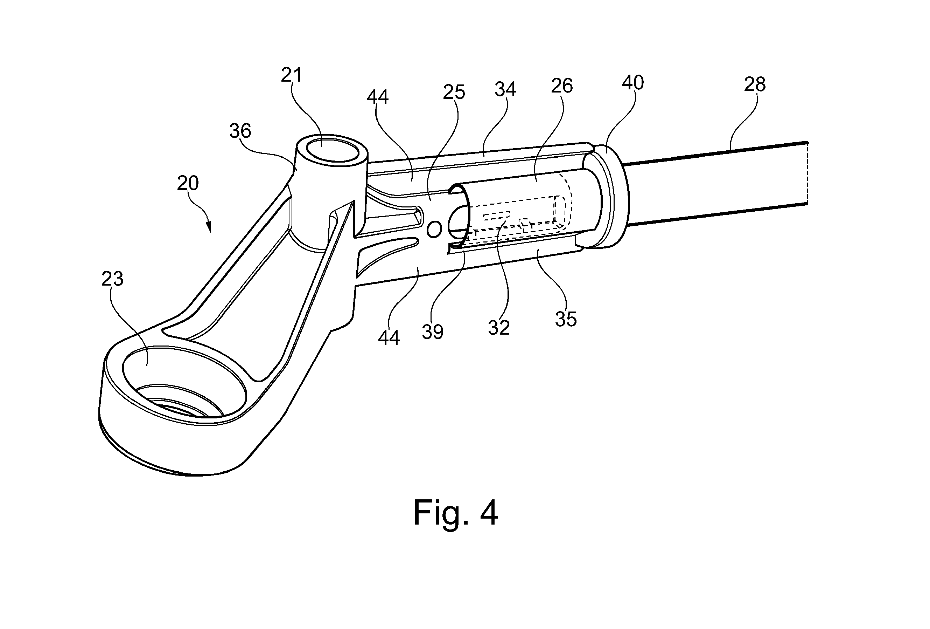

Fig. 1 shows a wiper linkage 100 according to the prior art for a wiper system for cleaning a vehicle windscreen (not illustrated), in particular a vehicle windscreen in the front region of the motor vehicle. The wiper linkage 100 comprises a carrier plate 10 to which a windscreen wiper motor 1 is fastened. The windscreen wiper motor 1 drives a lever 12, on which a first wiper shaft 13 is rotatably mounted, via a first transmission rod 11, which is connected to the output shaft 2 of the windscreen wiper motor 1. A second wiper shaft 14 is arranged in the region of a carrier element 20 which, according to the invention, in a manner corresponding to the illustration in Figs. 2 and 3, has a receiving opening 21 in the form of a passage hole for receiving the second wiper shaft 14. An arm 22 on the side facing away from the receiving opening 21 has a second receiving opening 23 for fastening the carrier element 20 to the output shaft 2. Furthermore, the carrier element 20 on that side of the arm 22 which faces away from the receiving opening 23 has a pin-shaped fastening section 25 which, as can be seen in particular with reference to Figs. 1 and 4, interacts with a tubular section 26 of a rod-like transmission element 28 which, in turn, is connected to the lever 12 on the side facing away from the carrier element 20.

The carrier element 20 is configured as a plastic injection moulded part and, according to the illustration in Fig. 2, has, in the region of the fastening section 25, two recesses 30 which are arranged offset with respect to one another by 180° in relation to a longitudinal axis 29 of the fastening section 25, and of which only one recess 30 can be seen in the figures. In the region between the recesses 30, the fastening section 25 is provided in a cylindrical or round outer surface 31, the diameter and shape of which are matched to the inner circumference of the transmission element 28 in the section 26. As a result, the transmission element 28 bears with the inner circumference thereof in the region between the recesses 30 against the fastening section 25 of the carrier element 20 in a form-fitting manner.

In order to position the transmission element 28 on the fastening section 25 in the direction of the longitudinal axis 29 and in the angular position thereof with respect to the carrier element 20, it is provided that those sections 32 of the transmission element 28 which overlap with the recesses 30 enter into force-fitting or form-fitting contact with the carrier element 20 by being pushed or pressed into the recesses 30.

In a manner offset by respectively 90° in relation to the longitudinal axis 29 of the fastening section 25, the carrier element 20 in each case has a connecting or reinforcing element 34, 35 of rib- or web-shaped configuration which is connected in one piece to the carrier element 20 on the side facing the second receiving opening 21. The reinforcing element 34, 35, which substantially has a rectangular cross section, reaches here directly as far as a sleeve-shaped section 36 which forms the second receiving opening 21. It is also essential that the longitudinal axis 29, as can be seen in particular with reference to Fig. 2, runs perpendicularly to the axis 37, in which the second wiper shaft 14 is arranged.

An elongate gap 38, 39 is formed between the two reinforcing elements 34, 35 and the outer surface 31 of the fastening section 25, the opening width of which gap is matched to the wall thickness of the tubular transmission element 28 and either corresponds to the outside diameter of the transmission element 28 or is larger than the latter. At a distance a from the end of the fastening section 25, the two reinforcing elements 34, 35 are connected in one piece to a retaining ring 40, the inner circumference of which forms an additional retaining region 41 for the transmission element 28. The inside diameter d of the retaining ring 40 is likewise adapted to the outside diameter of the transmission element 28, and therefore the transmission element 28 can be pushed through the retaining ring 40 in the direction of the fastening section 25 merely at maximum with installation play. As can be seen in particular with reference to Fig. 3, the retaining ring 40 has two sections 42, 43 which are of half-ring-shaped design and are arranged at a distance from and parallel to each other.

In order to install the transmission element 28 on the carrier element 20, the transmission element 28 is pushed through the retaining ring 40 and over onto the fastening section 25. As soon as the transmission element 28 has reached the axial desired position with respect to the longitudinal axis 29, the wall of the transmission element 28 is pushed or pressed in the region of the tubular section 26 into the recesses 30 in order to fix the transmission element 28 on the fastening section 25 of the carrier element 20. In this case, the tubular section 26 ends in the region of the recesses 30. In particular, the connecting region 44 of the reinforcing element 34, 35, which connecting region runs parallel to the longitudinal axis 29, forms an axial stop with the fastening section 25 for the tubular section 26 of the transmission element 28.

The carrier element 20 according to the invention described to this extent can be modified in diverse ways without departing from the inventive concept.

### List of designations

- 1: Windscreen wiper motor
- 2: Output shaft

- 10: Carrier plate
- 11: Transmission rod
- 12: Lever
- 13: First wiper shaft
- 14: Second wiper shaft
- 20: Carrier element
- 21: First receiving opening
- 22: Arm
- 23: Second receiving opening
- 25: Fastening section
- 26: Tubular section
- 28: Transmission element
- 29: Longitudinal axis
- 30: Recess
- 31: Outer surface
- 32: Region
- 34: Reinforcing element
- 35: Reinforcing element
- 36: Section
- 37: Axis
- 38: Gap
- 39: Gap
- 40: Retaining ring
- 41: Retaining region
- 42: Section
- 43: Section
- 44: Connecting region

- 100: Wiper linkage

- a: Distance
- d: Inside diameter

## Claims

1. Carrier element (10) for a wiper linkage (100) of a wiper system for cleaning a vehicle windscreen comprising a pin-shaped fastening section (11) on the outer circumference whereof a tubular section (12) of a transmission element (15) can be slid and can be fixed on the fastening section (11) by means of a press connection, wherein the tubular section (12) can be pressed into at least one recess (16) of the fastening section (11),
**characterised in,**
**that** the carrier element (10) has an additional retaining region (18) which is configured to receive bending forces acting on the transmission element (15) and introduce them into the carrier element (10).

2. The carrier element according to claim 1,
**characterised in,**
**that** the additional retaining region (18) is disposed at a distance (a) from the fastening section (11).

3. The carrier element according to claim 1 or 2,
**characterised in,**
**that** the additional retaining region (18) surrounds the transmission element (15) on its outer circumference at least in sections.

4. The carrier element according to claim 2 or 3,
**characterised in,**
**that** the additional retaining region (18) is connected by means of at least one, preferably by means of a plurality of connecting elements (19) to the carrier element (10).

5. The carrier element according to claim 4,
**characterised in,**
**that** a plurality of connecting elements (19) are provided which together with the retaining region (18) are formed in one piece on the carrier element (10).

6. The carrier element according to claim 4 or 5,
**characterised in,**
**that** the connecting element (19) is configured to be rib- or web-shaped and extends over the entire length of the fastening section (11), that on the side facing away from the transmission element (15) the connecting element (19) is connected to the carrier element (10) and that the connecting element (19) preferably extends parallel to the longitudinal axis (22) of the fastening section (11).

7. **The carrier element according to claim 6,**
**characterised in,**
**that a gap (21) is formed in the region of the tubular section (12) of the transmission element (15) between the fastening section (11) and the connecting section (19).**

8. The carrier element according to claim 7,
**characterised in,**
**that** two connecting elements (19) and two recesses (16) are provided, wherein the two recesses (16) and the two connecting elements (19) are each arranged offset with respect to one another by respectively 180° in relation to the longitudinal axis (22) of the fastening section (11) and **that a recess (16) and a connecting element (19) are each arranged offset with respect to one another by respectively 90° in relation to the longitudinal axis (22) of the fastening section (11).**

9. **The carrier element according to claim 8,**
**characterised in,**
**that the fastening section (11) has a cross-section in the region of the gap (21) which is adapted to the inner cross-section of the tubular section (12) of the transmission element (15), and that the recess (16) is arranged offset with respect the gap (21) in relation to the longitudinal axis (22) of the fastening section (11).**

10. The carrier element according to claim 6 to 9,
**characterised in,**
**that** the carrier element (10) has a through-opening (23) for a wiper shaft and that the longitudinal axis (24) of the through-opening (23) **is disposed at a right angle with respect to the longitudinal axis (22) of the fastening section (11).**

11. The carrier element according to any one of claims 1 to 10,
**characterised in,**
**that** the carrier element (10) is configured as a plastic injection moulded part.

12. The carrier element according to any one of claims 3 to 11,
**characterised in,**
**that** the retaining region (18) is configured to be annular.

13. Wiper linkage (100) for a wiper system for cleaning a vehicle windscreen comprising a carrier element (10) according to any one of claims 1 to 12.
